# EUROPEAN PATENT APPLICATION

(11) **EP 2 395 728 A1**
(43) Date of publication of application: **14.12.2011**
(21) Application number: 11169706.6
(22) Date of filing: 13.06.2011
(51) Int. Cl.: H04L 29/06, H04L 29/08, H04L 12/58

(54) **System and method for enabling push based email service over IMS with IMS based service gateway decomposition and IMS based external service server**

(30) Priority: 14.06.2010 US 802757
(71) Applicant: RESEARCH IN MOTION LIMITED, Waterloo, Ontario N2L 3W8 (CA)
(72) Inventor: Son, Giyeong, Waterloo, Ontario N2L 5Z5 (CA); Preiss, Bruno Richard, Waterloo, Ontario N2L 5Z5 (CA); Lewis, Allan David, Waterloo, Ontario N2L 5Z5 (CA)
(74) Representative: Hibbert, Juliet Jane Grace

(57) **Abstract**

An apparatus in one example, comprising an external server, where the external server is non-IMS compliant, and wherein the external server further comprises a server redirector that is configured to package an email, where packaging the email comprises wrapping the email in an email envelope. The external server further comprises an IMS module configured to perform peer-to-peer IMS compliant communications.

## Description

### TECHNICAL FIELD

The invention relates generally to pushing email to mobile communication devices and more particularly to pushing email to a mobile communication device over an IP Multimedia Subsystem (IMS).

### BACKGROUND

As mobile communications devices (MCD) like the Blackberry become more common, subscribers use these devices more often for common applications like email. Vendors of network infrastructure and makers of mobile communication devices want to ensure that a subscriber using a mobile communication device receives the most reliable service for common applications like email. As the telecommunications industry continues to migrate to third generation infrastructure, third generation devices and servers must efficiently interoperate with third generation infrastructure such as IMS infrastructure.

In current network architectures an email server that pushes emails to an MCD via an IMS network typically resides outside the IMS network. Further, the IMS architecture used to communicate email from an email server to an MCD is typically not scalable or sufficiently reliable. Because the email server resides outside the IMS network, a connection with the external server does not offer the benefits of IMS, such as security and billing.

### DESCRIPTION OF THE DRAWINGS

Features of example implementations of the invention will become apparent from the description, the claims, and the accompanying drawings in which:

FIG. 1 shows in block diagram form the network topology of an external server configured to provide content to an IMS enabled application server for provision to user equipment according to conventional IMS protocol;

FIG. 2 shows in block diagram form, a modified IMS communication system configured to push email over IMS;

FIG. 3 depicts a flow chart that may facilitate delivery of data items over IMS based on a push model;

FIG. 4 is a representation of a network communications environment that may facilitate service delivery in accordance with the present system and method;

FIG. 5 is one representation of a modified IMS network configuration including an external server configured to be IMS compliant;

FIG. 6 is one representation of a network architectural embodiment that shows various entities and their logical elements and service flows for providing email service delivery over IMS;

FIG. 7 depicts a flowchart associated with effectuating delivery of data items over IMS;

FIG. 8 depicts an example flow chart for effectuating delivery of a data item from an IMS-aware MCD;

FIG. 9 depicts an example flow chart depicting a modified IMS session request and registration process;

FIG. 10 depicts an example flow chart of a modified IMS session request and registration process;

FIG. 11 depicts an example flow chart relating to a service gateway decomposition scheme according to one embodiment that may address scalability and reliability concerns;

FIG. 12 depicts one example of a network architecture for facilitating delivery of data items over IMS where service gateway functionality may be decomposed;

FIG. 13 depicts a network communications environment that illustrates a service network that may be disposed between service gateway controllers and service gateways; and

FIG. 14 depicts a block diagram of an embodiment of a communications device operable for purposes of the present patent disclosure.

### DETAILED DESCRIPTION

Described herein is a system and method for enabling push-based email service over IMS with IMS-based service gateway decomposition. In some embodiments the system and method described herein may comprise service gateways (SGs) of an IMS network where the SGs are decomposed into a number of simple SGs and a service gateway controller (SGC). Additional details and further variations regarding decomposing an IMS network into simple SGs and SGCs may be found in "ARCHITECTURE FOR SERVICE DELIVERY IN A NETWORK ENVIRONMENT INCLUDING IMS," published as U.S. Patent Application No. 2009/0005008, in the names of: Giyeong Son, Allan D. Lewis and Bruno R. Priess.

Further, aspects of the system and method described herein may comprise bringing an external server under the IMS umbrella. In an embodiment, the external server may be an email server. By bringing an external server under the IMS umbrella, a connection to the external server benefits from IMS features such as, service transaction reliability, security and billing. Still further, from the viewpoint of the IMS architecture, the external server is a peer to a mobile device with which the external server is communicating information. Thus interactions between a mobile device and the external server are now peer-to-peer push rather than server-to-client push. Additional details and further variations regarding bringing an external server under the IMS umbrella may be found in "SYSTEM AND METHOD FOR PUSHING INFORMATION FROM A SERVER TO A MOBILE DEVICE," published as U.S. Patent Application No. 2007/0286159.

As explained above, current network architectures do not offer a peer-to-peer push based email service between an external corporate server and an MCD in an architecture that is reliable and scalable. Still further, this reliable and scalable configuration should bring the external server under the IMS umbrella to take advantage of IMS features such as, security and billing.

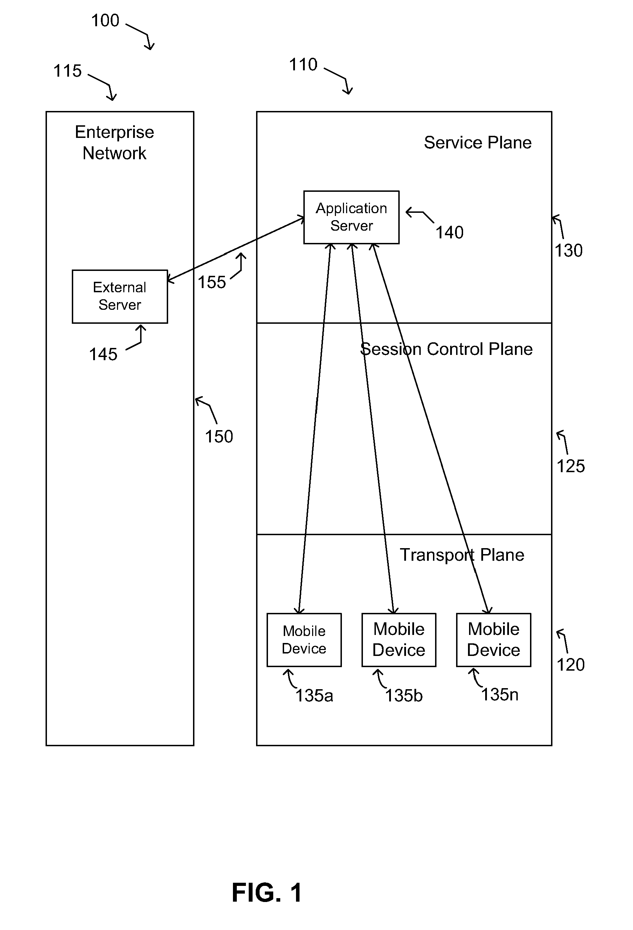

Reference is first made to FIG. 1, which shows in block diagram form the network topology of a system 100 including an external server configured to provide content to an IP Multimedia Subsystem (IMS) enabled application server according to conventional IMS protocol. Hardware included in the system 100 can be divided into two groups: hardware conforming to the IMS architecture, generally indicated by reference 110, and external hardware not conforming to the IMS architecture, generally indicated by reference 115. At the highest level of abstraction, the IMS architecture may be split into a transport plane 120, a session control plane 125, and a service plane 130. User equipment such as mobile devices 135a-n, individually indicated as 135a, 135b, ... 135n, interface with the transport plane 120, while the control plane 125 mediates signaling between the mobile devices 135 and an application server 140 that resides in the service plane 130. Generally, an IMS compliant network having hardware residing in the service plane 130, the session control plane 125, and the transport plane 120 is owned and operated by a number of network service providers and only the mobile devices 135 are owned by end users. However, situations arise where an organization associated with the end users may wish to directly provide content to the mobile devices 135 belonging to the end users. If an external server 145, such as a corporate mail server residing in a private enterprise network 150 is to provide content to IMS enabled user equipment residing in the transport plane 120, such content provision by the external server 145 would have to be indirectly implemented in the IMS architecture by using the application server 140 in the IMS service plane 130 as a service gateway to the IMS domain. The external server 145 pushes information to the service gateway running on the application server 140 over a connection 155 and the service gateway then pushes the information through the session control plane 125 and through the transport plane 120 to the users of the mobile devices 135. The method of communication implemented on the connection 155 is outside the scope of the IMS reference architecture, which causes several problems, such as the use of ad hoc and non-standard implementations. Such implementations do not provide the benefits that an IMS compliant external server implementation would provide when properly configured if IMS included provisions for external servers, which it does not. IMS provides security, billing (e.g., bandwidth usage related), and management related provisions (e.g., Quality of Service specifications) that greatly simplify network administration. These provisions are not available to implementations such as the connection 155.

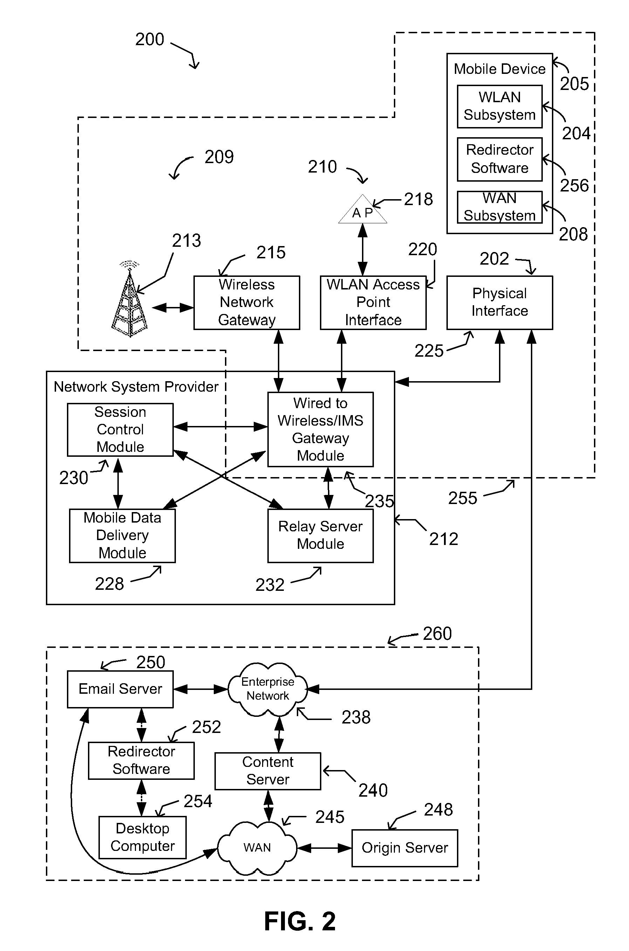

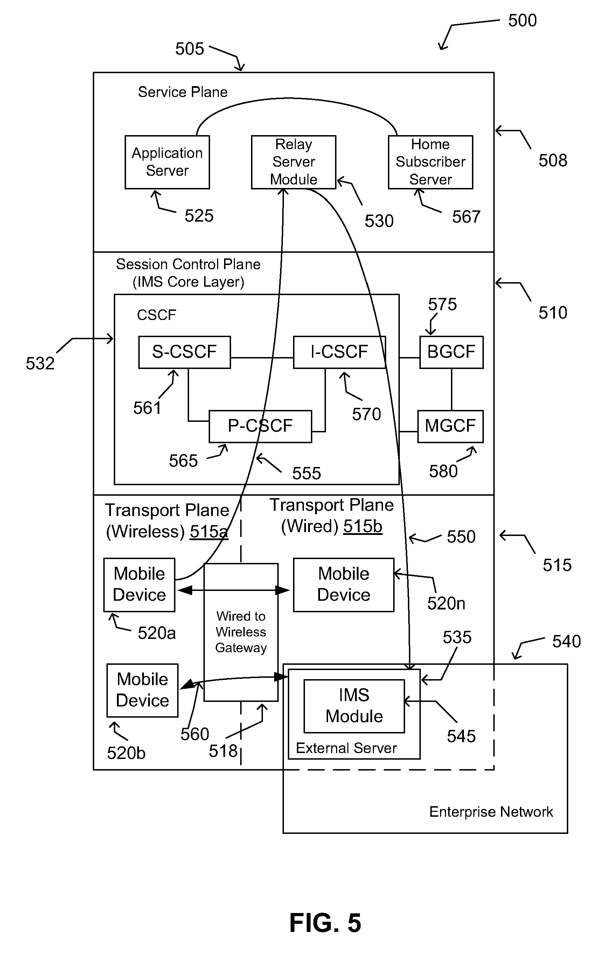

Reference is next made to FIG. 2, which shows a communication system 200 suitable for application to a modified IMS configuration, which will be described in greater detail in connection with FIG. 5. The communication system 200 generally includes one or more mobile electronic devices 205 (only one of which is shown in FIG. 2), a wireless Wide Area Network (WAN) 209, a Wireless Local Area Network (WLAN) 210, and may also include other interfaces 202.

Referring to FIG. 2, the wireless WAN 209 may be implemented as a packet-based cellular network that includes a number of base stations 213 (one of which is shown in FIG. 2) where each of the base stations 213 provides wireless Radio Frequency (RF) coverage to a corresponding area or cell. The wireless WAN 209 is typically operated by a cellular network service provider that sells subscription packages to users of the mobile electronic devices 205. The wireless WAN 209 comprises a number of different types of networks, for example, Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network) or various other third generation networks such as EDGE (Enhanced Data rates for GSM Evolution) or UMTS (Universal Mobile Telecommunications Systems).

As shown in FIG. 2, the communications system 200 also includes a wireless network gateway 215 and one or more network provider systems 212. The wireless network gateway 215 provides translation and routing services between the network provider system(s) 212 and the WAN 209 which facilitates communication between the mobile electronic devices 205 and other devices (not shown) connected, directly or indirectly, to the network provider system 212.

The WLAN 210 comprises a network which in some examples conforms to IEEE 802.11 standards such as 802.11b and 802.11g; however, other communications protocols may also be used for the WLAN 210. The WLAN 210 includes one or more wireless RF Access Points (AP) 218 (one of which is shown in FIG. 2) that collectively provide a WLAN coverage area. For the embodiment depicted in FIG. 2, the WLAN 210 is operated by an enterprise (for example, a business or university) and the access points 218 are connected to an access point (AP) interface 220. The AP interface 220 provides translation and routing services between the access points 218 and the network provider system 212 to facilitate communication between two or more of the mobile electronic devices 205 and other devices connected, directly or indirectly, to the network provider system 212. The AP interface 220 is implemented using a computer, for example, a server running a suitable computer program or software.

According to one embodiment, the other interfaces 202 may be implemented using a physical interface indicated by the reference 225. The physical interface 225 includes an Ethernet, Universal Serial Bus (USB), Firewire, or infrared (IR) connection implemented to exchange information between the network provider system 212 and the mobile electronic device 205.

The network provider system 212 comprises a server or a number of servers that may be located behind a firewall (not shown). The network provider system 212 includes a number of modules including a mobile data delivery module 228, a session control module 230, a relay server module 232, and a wired to wireless gateway and IMS module 235. In one embodiment, the various modules may be implemented as a number of services running on a single server or as a number of interconnected servers each running a software program to implement the functionality of the respective module. The network provider system 212 provides access for the mobile electronic devices 205, through either the wireless WAN 209, the WLAN 210, or the other connection 202 to the devices connected, for example, through an enterprise network 238 (e.g., an intranet), to the network provider system 212. In one embodiment, the data delivery module 228, the session control module 230, the relay server module 232 and the wired to wireless gateway and IMS module 235 are implemented on a computer, such as the network provider system 212.

The enterprise network 238 may be connected to the network provider system 212 through the Internet, an intranet or a direct connection, such as the physical interface 225. According to one embodiment, the enterprise network 238 comprises an intranet for a corporation or other type of organization. In at least some example embodiments, the network provider system 212 is part of the enterprise network 238, and is located behind a corporate firewall and connected to the wireless network gateway 215 through the Internet. As shown in FIG. 2, an application/content server 240 may be connected to and included within the enterprise network 238 and may also be connected to another network, for example a Wide Area Network (WAN), indicated by reference 245. The WAN 245 may further connect to other networks. In example embodiments, the WAN 245 can include the Internet, a direct connection, a LAN, a wireless communication link, or any combination thereof. Content providers, such as Web servers, may be connected to the WAN 245, an example of which is shown in FIG. 2 as an origin server, indicated by reference 248.

In one example configuration, an email server 250 may be connected to and included within the enterprise network 238. The email server 250 may be configured with a redirector software or module 252 enabling the email server 250 to direct or redirect email messages received over the WAN 245 and internally within the enterprise network 238 to be addressed to the mobile electronic device(s) 205. In another example configuration, a desktop computer 254 may be connected to and included within the enterprise network 238. The desktop computer 254 may also be configured with redirector software 252 enabling the desktop computer 254 to direct or redirect email messages received over the WAN 245 and internally within the enterprise network 238 to be addressed to the mobile electronic device(s) 205. When the redirector 252 resides on the email server 250, the redirector may be referred to as a server redirector. When the redirector 252 resides on desktop computer or other similar computing device, the server redirector 252 may be referred to as a computing device redirector.

According to one embodiment, the mobile data delivery module 228, the wired to wireless gateway and IMS module 235, and the relay server module 232 may individually or collectively provide HTTP connectivity between each of the wireless WAN 209, the WLAN 210 and the other connection 202, and devices or networks connected directly or indirectly to the network provider system 212. The network 238, the application/content server 240, the WAN 245, and the origin server 248 are individually or collectively in various combinations a content source for the network provider system 212. It will be appreciated that the system shown in FIG. 2 comprises one possible communication network or configuration for use with the mobile electronic devices 205.

The mobile electronic devices 205 are configured to operate, as described above with reference to FIG. 2, within the wireless WAN 209 and the WLAN 210. As shown in FIG. 2, the mobile electronic device 205 is configured with or includes a WAN communications subsystem 208 for communicating with the wireless WAN 209 and a WLAN communications subsystem 204 for communicating with the access points 218 of the WLAN 210.

In one embodiment, the communications system 200 may be configured to implement a modified version of an IMS compliant architecture. Generally, the transport plane, indicated by reference box 255, is implemented by some components of the system 200 residing within the box 255, and the hardware external to the IMS architecture is indicated by reference box 260. The servers and modules that form part of the network provider system 212 may be configured to collectively implement various aspects of the session control plane and the service plane of the IMS architecture, and may fall either inside or outside of the area 255 (i.e., the transport plane) depending on the specific configuration chosen for the system 200. The configuration of the system 200 that may provide an IMS compliant architecture is further described below in connection with FIG. 5.

To facilitate redirection or replication of data items from an enterprise site (e.g., from a desktop computer, a user mailbox, or some other location) to MCD 205 for a particular user, specialized software 252 may be provided that may be executed on the email server 250, on a remote service server (RSS) (not shown), on the desktop computer 254, or as a separate application server in the enterprise network (not shown). Regardless of how such software is provisioned within the enterprise network 238, a client software component 256 (i.e., a mobile redirector) is operable to be executed on MCD 205 to which user-selectable data items may be redirected.

In general, a variety of data items may be processed to be redirected over the IMS network. By way of example, the data items may comprise email messages, calendar events, meeting notifications, address or other personal data assistant (PDA) entries, journal entries, personal reminders, Instant Messages (IM), multimedia notifications/messages (e.g., audio, video clips), or other items from an external network (e.g., stock quotations, news stories, podcasts, webcasts, content downloads, etc. that are pushed or otherwise provided to users). In one embodiment, the data items to be redirected may be detected by way of a polling mechanism wherein specialized software such as software 252 may be configured to poll for certain data items (i.e., "pull" model) on behalf of a user authorized for receiving redirected data items at a wireless user equipment (UE) device such as MCD 205. In an alternative embodiment, a "push" model may be employed wherein the data items to be redirected may be detected based on receiving automatically generated notifications. Where the data items are stored in databases, changes to such databases (e.g., due to arrival of a new email, updating of an address book, etc.) may be automatically provided to software 252 (i.e., without it having to poll for the changes) via suitable advise requests such as those provided by Messaging Application Programming Interface (MAPI), for example. Additionally, regardless of whether a pull model or a push model is employed for detecting the data items, an event-driven scheme may also be provided such that redirection of a data item may be rendered dependent upon setting certain flags associated with user-selectable events (i.e., trigger events). That is, in other words, the redirection software 252 may be "turned on" or "turned off" based on whether a trigger event has occurred and, upon the occurrence of the event (which may generate a signal that operates to set a trigger flag), new data items may be continuously redirected (i.e., without further global gating conditions). These user-defined trigger events may include external events, internal events and networked events, or a combination thereof. Examples of external events include: receiving a message from the user's MCD to begin redirection; receiving a similar message from some external computer; sensing that the user is no longer in the vicinity of the user's computer system; or any other event that is external to the user's computer system. Internal events could be a calendar alarm, screen saver activation, keyboard timeout, programmable timer, or any other user-defined event that is internal to the computer system executing the redirection software 252. Networked events are user-defined messages that are transmitted from another computer coupled to the system executing the redirection software 252 via a network (e.g., a LAN) to initiate redirection. These are just some of the examples of the types of user-defined events that can trigger the redirector software 252 to initiate redirection of data items to the user's MCD. As a further implementation, a variety of filtering schemes may also be used for further modulating the redirection behavior regardless of whether the redirection software is disposed within the enterprise or at a standalone desktop computer or operable in association with an Internet email system. Accordingly, the functionality of the redirection software 252 may comprise one or more of the following: (1) configure and set up one or more user-defined trigger events (which may be user-specific, time-window-specific, etc.) that will start redirection; (2) configure the types of user data items for redirection and optionally configure a preferred list of message senders whose messages are to be redirected; (3) configure the type and capabilities of the user's handheld equipment (e.g., MCD 205); (4) receive messages and signals from data item repackaging systems and the event generating systems; and (5) command and control the redirection of the user-selected data items to the user's MCD the repackaging systems. Those skilled in the art will recognize that other functions and processes not specifically enumerated (e.g., processing of attachments, encryption, encoding/transcoding, compression, etc.) may also be integrated into or otherwise associated with the functionality of software 252.

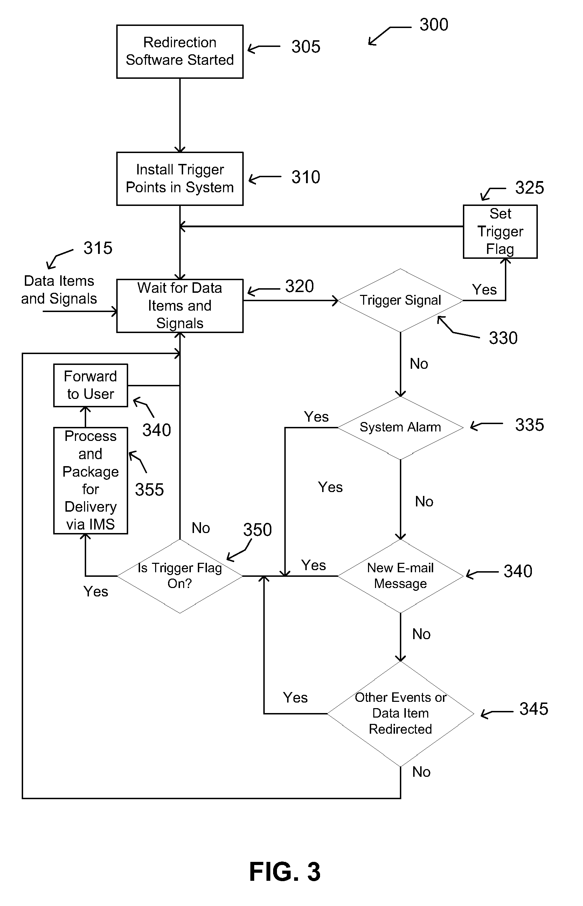

FIG. 3 depicts a flowchart associated with an exemplary embodiment 300 of the present patent disclosure for facilitating delivery of data items over IMS based on a push model. As illustrated, redirector software 252, whose execution may be performed on different computers in a distributed computing environment, may be started and initially configured (blocks 305 and 310) to set up the redirection process for one or more users. As alluded to previously, the initial configuration of redirection software 252 may include: (1) defining the trigger events or trigger points for triggering redirection; (2) identifying one or more data item types for redirection; (3) selecting a repackaging sub-system, either standard email or a special-purpose technique; (4) selecting the type of mobile communications device, indicating whether and what type of attachments the device is capable of receiving and processing, and inputting an address of the mobile communications device; and (5) configuring one or more lists, e.g., a preferred list of user-selectable senders whose messages are to be redirected. If the redirection software 252 is executable on a network server, additional configuration steps may be necessary to enable redirection for a particular desktop system (e.g., desktop computer 254 associated with a particular user), including: (1) setting up a profile for the desktop system indicating its address, events that will trigger redirection, and the data items that are to be redirected upon detecting an event; (2) maintaining a storage area at the server for the data items; and (3) storing the type of mobile communications device to which the desktop computer's data items are to be redirected, whether and what type of attachments the device is capable of receiving and processing, as well as an address of the mobile device. Once the redirector software is configured and the trigger points (or trigger events) are enabled (blocks 305 and 310), the redirector software is rendered into what may be referred to as "redirection mode," whereupon the software is operable to wait for data items and signals 315 such that redirection may commence if a new data item is available (block 320). A data item could be an email message or some other user data item that may have been selected for redirection, and a signal could be a trigger signal generated upon occurrence of a trigger event, or could be some other type of signal that has not been configured as an event trigger. When a message or signal is detected, the software is operable to determine (block 330) whether it is one of the trigger events that have been configured to signal redirection. If so, then at block 325 a trigger flag is set, indicating that subsequently detected data items that have been selected for redirection should be processed and packaged into processed information suitable for transmission to the user's MCD via IMS. In another embodiment, the item may be repackaged and redirected from an MCD to an email server or desktop computer. In an embodiment, repackaging the item may comprise wrapping the item in an E-mail envelope that corresponds to the address of the mobile data communication device or other device. Alternatively special-purpose TCP/IP wrapping techniques or other methods of wrapping may be used to repackage the item. If the signal 315 is not indicative of a trigger event, the software is operable to determine whether the data item is a system alarm (block 335), an email message (block 340), or some other type of information that has been selected for redirection (block 345). If the data item or signal is none of these three items, then control returns to block 320, where the redirector software continues to be in the redirection mode (i.e., waiting for additional messages, data items or signals 315 to act upon). If, however the message is one of these three types of information, then upon determining that the trigger flag has been set (block 350), the data item is indicated to be redirected to the MCD, or redirected to a email server, desktop computer or other device. If the trigger flag is set, the redirector software 252 causes a repackaging system (a standard email system or a TCP/IP-based system) to process and package the item for IMS delivery (block 355). At block 340, the processed/packaged data item is redirected to the user's MCD via IMS by directing the processed information to a suitable service gateway as will be described in detail herein below. In other embodiments the MCD may repackage a data item for delivery to an email server, desktop computer or other device. Control then returns to block 320 where the redirection software 252 continues to be in the redirection mode. Although not shown explicitly in FIG. 3, further determinations may be made after block 350 in order to verify whether any number of user-specific, sender-specific, data item-specific, time-window-specific filtering schemes are satisfied. Additional details regarding the redirection software functionality and further variations therein may be found in U.S. Pat. No. 6,219,694 (issued: Apr. 17, 2001) entitled "SYSTEM AND METHOD FOR PUSHING INFORMATION FROM A HOST SYSTEM TO A MOBILE DATA COMMUNICATION DEVICE HAVING A SHARED ELECTRONIC ADDRESS" in the names of Mihal Lazaridis and Gary P. Mousseau, which is assigned to the assignee of the present patent application.

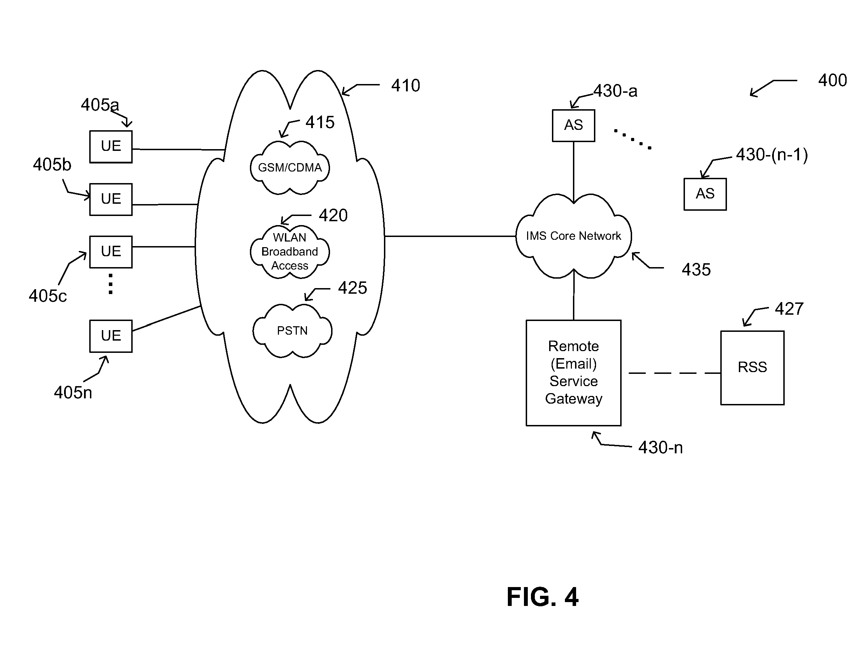

Referring now to FIG. 4, depicted therein is another view of a network communications environment 400 where an IMS network and an access network space are exemplified for purposes of facilitating service delivery in accordance with the teachings of the present patent disclosure. As illustrated, the network communications environment 400 includes an access space 410 comprised of a number of access technologies available to a plurality of UE devices 405-a through 405-N. For purposes of the present disclosure, a UE device may be any tethered or untethered communications device, and may include any mobile personal computer (e.g., laptops, palmtops, or handheld computing devices) equipped with a suitable wireless modem or a mobile communications device (e.g., cellular phones or data-enabled handheld devices capable of receiving and sending messages, web browsing, et cetera), or any enhanced PDA device or integrated information appliance capable of email, video mail, Internet access, corporate data access, messaging, calendaring and scheduling, information management, and the like. Preferably, the UE device is capable of operating in multiple modes in that it can engage in both circuit-switched (CS) as well as packet-switched (PS) communications, and can transition from one mode of communications to another mode of communications without loss of continuity and consume one or more IMS-based services. It will therefore be realized that any UE device 405-a through 405-n may be deemed to be illustrative of MCD 135 shown in FIG. 1 or MCD 205 of FIG. 2.

The access space 410 may be comprised of both CS and PS networks, which may involve wireless technologies, wireline technologies, broadband access technologies, etc. For example, reference numeral 415 refers to wireless technologies such as Global System for Mobile Communications (GSM) networks and Code Division Multiple Access (CDMA) networks, although it is envisaged that the teachings hereof may be extended to any 3.sup.rd Generation Partnership Project (3GPP)-compliant cellular network (e.g., 3GPP or 3GPP2) as well. Reference numeral 420 refers to broadband access networks including wireless local area networks or WLANs, Wi-MAX networks as well as fixed networks such as DSL, cable broadband, etc. Thus, for purposes of the present disclosure, the access technologies may comprise radio access technologies selected from IEEE 802.11a technology, IEEE 802.11b technology, IEEE 802.11g technology, IEEE 802.11n technology, GSM/EDGE Radio Access Network (GERAN) technology (both CS and PS domains), and Universal Mobile Telecommunications System (UMTS) technology, and Evolution-Data Optimized (EVDO) technology, and so on. Additionally, also exemplified as part of the access space 410 is a conventional wireline PSTN infrastructure 425.

The access space 410, including any CS-based networks via suitable gateways, is coupled to the IMS core network 435. As is well known, the IMS core 435 is operable according to the standards defined by the 3GPP and is designed to allow service providers to manage a variety of services that can be delivered via IP over any network type, wherein IP is used to transport both bearer traffic and Session Initiation Protocol (SIP)-based signaling traffic. Broadly, IMS is a framework for managing the applications (i.e., services) and networks (i.e., access) that is capable of providing multimedia services. IMS defines an "application server" as a network element that delivers services subscribers use, e.g., voice call continuity (VCC), Push-To-Talk (PTT), etc. IMS manages applications by defining standardized interfaces and common control components that each application server (AS) is required to have, e.g., subscriber profiles, IMS mobility, network access, authentication, service authorization, charging and billing, inter-operator functions, and interoperation with the legacy phone network.

It should be understood that whereas IMS is defined by the 3GPP standards body which mainly addresses GSM networks, another group, 3GPP2, is involved in defining a closely analogous architecture referred to as Multimedia Domain (MMD). MMD is essentially an IMS for CDMA networks, and since MMD and IMS are roughly equivalent, the term "IMS" may be used in this present patent disclosure to refer collectively to both IMS and MMD where applicable. In addition, fixed network standards for NGN (Next Generation Networks) that are based on reuse IMS are also being developed by bodies such as ETSI TISPAN, Cablelabs and the ITU-T. NGN and IMS are roughly equivalent, and accordingly the term "IMS" may also be used in this present patent disclosure to refer collectively to both IMS and NGN where applicable.

Continuing to refer to FIG. 4, reference numerals 430-a to 430-n refer to a plurality of AS nodes (also referred to as service gateways) operable to support various services, e.g., VCC, PTT, etc., alluded to hereinabove. Particularly, AS node 430-n embodies service gateway functionality that is operable to effectuate remote services delivery (e.g., delivery of redirected data items such as email messages, for instance) using an IMS infrastructure. Accordingly, AS node 430-n may be operably coupled to a remote services server (RSS) 427 in an exemplary embodiment, which in turn may be disposed in an enterprise network as illustrated in FIG. 1.

Reference is next made to FIG. 5, which shows in block diagram form a system 500 implementing a modified IMS network configuration including an external server configured to be IMS compliant and to provide content to mobile devices and an application server according to one embodiment. The IMS architecture may be viewed as being split into three planes: a service plane 508, a session control plane 510, and a transport plane 515. In one embodiment, the transport plane 515 is further split into two separate planes, a wireless transport plane 515a for interfacing with wireless user equipment and a wired transport plane 515b for interfacing with user equipment physically connected to the system 500. The wireless transport plane 515a and the wired transport plane 515b are interconnected by a wired to wireless gateway 518. User equipment such as mobile electronic devices 520a-n, individually indicated as 520a, 520b, ... 520n, interface with the transport plane 515, while a session control module or call session control function (CSCF) 532 in the session control plane 510 mediates signaling between the mobile electronic devices 520 and an application server 525 and a relay server module 530 that reside in the service plane 508. In one embodiment, the relay server module 530 may be implemented as a server functioning as a relay server, also referred to as a session redirect server. Although not depicted, each MCD 520a-n may further comprise a redirector module. In one embodiment, the wired to wireless gateway 518 facilitates direct communication between wireless devices and wired devices residing in the transport plane 515, such as between the mobile electronic device 520a and the mobile electronic device 520n. In another embodiment, the wired to wireless gateway 518 is the bridge that extends IMS compliant communications into the wireless world, allowing wireless devices such as the mobile electronic devices 520a and 520b to interface with components of the transport plane 515.

A number of SIP servers or proxies, collectively referred to as call session control function 532, are operable as part of the IMS core layer or session control plane 510 for processing SIP signaling packets in the IMS. A Proxy-CSCF (P-CSCF) 565 is a SIP proxy that is usually the first contact point for an IMS-based device. P-CSCF 565 may be located either in a visited network (in full IMS networks) or in the subscriber's home network (when the visited network is not IMS-compliant). The IMS-aware MCD may discover its P-CSCF with either dynamic host configuration protocol (DHCP), or it may be assigned in a PDP context (e.g., in GPRS). A Serving-CSCF (S-CSCF) 561 is operable as a central node of the IMS signaling plane, and is usually located in the subscriber's home network. The functionality of S-CSCF 561 includes interfacing with a home subscriber server (HSS) 567 in the service plane 508 to download and upload user profiles, policies, routing information relating to redirected data items, etc. An Interrogating-CSCF (I-CSCF) 570 is another SIP functionality at the edge of an administrative domain, which may be used for querying HSS 567 to retrieve an MCD location. In general, accordingly, the HSS database may contain user profiles (i.e., subscription-related information), including various user and device identifies such as International Mobile Subscriber Identity (IMSI), Temporary Mobile Subscriber Identity (TMSI), International Mobile Equipment Identity (IMEI), Mobile Subscriber ISDN Number (MSISDN), Universally Unique Identifier (UUID), as well as additional IMS-specific identities such as IP Multimedia Private Identity (IMPI) and IP Multimedia Public Identity (IMPU) that are implemented as Tel-Uniform Resource Identifiers (URIs) or SIP-URIs. Whereas the IMPI is unique to a particular user or device in a 3GPP, it is possible to have multiple Public Identities (i.e., IMPUs) per IMPI.

Furthermore, the session control plane 510 may also include other functions that facilitate call routing relative to a circuit switched network (CSN) such as a PLMN. For instance, a Breakout Gateway Control Function (BGCF) 575 includes routing functionality based on E.164 phone numbers when communicating to a phone in the PLMN. A Media Gateway Controller Function (MGCF) 580 includes functionality for effectuating call control protocol conversion between SIP and ISDN User Part (ISUP). In addition to HSS 567, the service plane 508 includes one or more AS nodes, e.g., AS 525, with appropriate interfacing with the entities in the session control plane 510 for effectuating services or applications. As pointed out previously, an AS node (i.e., service gateway) may be provided for effectuating delivery of redirected data items using the IMS infrastructure.

According to one embodiment, in a converged wired/wireless IMS deployment, a corporate server, such as an external server 535, forming part of an enterprise network 540 is configured to be, from the perspective of the IMS reference architecture, a piece of user equipment. Configuring the external server 535 as user equipment means that, in the present example and from the perspective of the IMS reference architecture, the external server 535 is a peer to the mobile electronic devices 520. As a result, the dynamics of the communication between the external server 535 and mobile electronic devices 520 changes from a server-to-client push methodology, as shown in FIG. 1, to a peer-to-peer push methodology, as shown in FIG. 5. In some embodiments, the external server 535 may be coupled with an email server on one physical platform and communicate with the email server through a native interface such as MAPI (Messaging Application Protocol Interface) or some other protocol. In other embodiments, the external server 535 and email server may reside on two physical platforms and perform inter-platform communication using the native interface. The external server 535 may have an IMS module 545 responsible for coordinating the IMS compliant aspect of the communications to and from the external server 535 when the external server 535 is communicating with devices within the system 505. Although the external server 535 depicts a separate IMS module 545, the functionality of the IMS module 545 may be integrated with the external server, such that the external server 535 performs the IMS compliant communications with devices within the system 505. The external server 535 may also comprise a redirector module (not depicted).

In one embodiment, the external server 535 sends and receives communications to and from the mobile electronic devices 520, such as the mobile electronic device 520a, through the relay server module 530 using a first connection 550 between the external server 535 and the relay server module 530 and a second connection 555 between the relay server module 530 and the mobile electronic devices 520. In another embodiment, the external server 535 requests a direct connection with one of the mobile electronic devices 520 (e.g., the mobile electronic device 520b) from the relay server module 530 (e.g., using the connection 550) and the relay server module 530 then coordinates establishment of a direct connection, such as a direct connection 560, which uses the wired to wireless gateway 518. In this embodiment, the relay server module 530 acts as a session redirect server. As such, the session control module 532 asks the relay server to inform the session control module 532 about where session establishment requests are to be directed. The relay server module 530 provides information to the session control module 532 of the target external server (such as the external server 535) and its identifier and address. Next, the session control module 532 sends the external server 535 the session request. In yet another embodiment, the external server 535 requests a direct connection with one of the mobile electronic devices 520 (e.g., the mobile electronic device 520b) directly from the session control module 532 and the session control module 532 then coordinates establishment of a direct connection, such as a direct connection 560, which uses the wired to wireless gateway 518. In this embodiment where the relay server module 530 is not used, the device requesting the session must specify the target with which the session is requested. In other embodiments, the relay server module 530 may not be present or in use and the session control module 532 may implement at least some of the functions of the relay server module 530.

Configuring the external server 535 as user equipment has a number of possible results, the first of which brings the external server 535 under the IMS umbrella. For example, the network 238 shown in FIG. 2 may now be directly connected to the wired to wireless and IMS gateway 235 with any of the servers 250, 240, and 248 configured as user equipment in the transport plane 515 (i.e., the transport plane 255 in FIG. 1). This means that the connection between the external server 535 and the IMS architecture 505 (e.g., the connections 550 and 555) benefits from all the IMS features that are available under the IMS specification, such as security and billing provisions. In particular, management of the external server 535 is simplified because the same IMS provided methods used to manage the connections with the mobile electronic devices 520 can be used to manage the connections with the external server 535. In this approach, push-based delivery of information from the external server 535 to the mobile electronic devices 520 may be mediated by an application server such as the relay server module 530 or the session control module 532, with the external server 535 now being viewed as an IMS compliant piece of the overall IMS framework. Where there are numerous external servers such as the external server 535 providing content to various mobile electronic devices 520, the addition of the external servers under the IMS umbrella greatly simplifies the job of the administration of the system 500 because all external servers are connected to the system 500 with IMS compliant connections, as opposed to countless proprietary connections as may be the case using the system 100 shown in FIG. 1.

A number of interaction models for communications occurring between the external server 535 and devices within the IMS architecture 505 and between the mobile electronic devices 520 and devices within the IMS architecture 505 are possible. In one embodiment, permanent sessions may be established between the external server 535 and the relay server module 530, and between the mobile electronic devices 520 and the relay server module 530. In this embodiment, once connections are established with the relay server module 530, the connections remain established until intentionally terminated by a user of one of the mobile electronic devices 520 or by a network administrator of software running on the external server 535. In this embodiment, only one connection between the external server 535 and the relay server module 530 may be needed to service all of the mobile electronic devices 520. The IMS bearer channel for this permanent session is used to push information to the relay server module 530. For example, in the case of one of the mobile electronic devices 520a, the bearer channel used by the external server 535 may be based on TCP with a certain message format and type. Similarly, the mobile electronic device 520a may request establishment of a permanent session between the mobile electronic device 520a and the relay server module 530 when the mobile electronic device 520a is turned on. The bearer channel for the session between the mobile electronic device 520a and the relay server module 530 is used to push information from the relay server module 530 to the mobile electronic device 520a. For example, in the case of the mobile electronic device 520a service, the bearer channel may be based on UDP with another message format and type. Where the external server 535 communicates with the mobile electronic devices 520 via the relay server module 530, a different protocol may be used for the connection 550 between the external server 535 and the relay server module 530 and the connections between each of the mobile electronic devices 520 and the relay server module 530 (e.g., the connection 555). In one embodiment, reverse information flows (e.g., bidirectional communications) from the mobile electronic device 520a to the relay server module 530 and on to the external server 535 are also supported. In this case, the mobile electronic devices 520 may request session establishment between themselves and the relay server module 530 when the mobile electronic devices 520 have information to send to the external server 535, if a permanent session is not already established.

In another embodiment, transient sessions are established between the external server 535 and the relay server module 530, and between the mobile electronic devices 520 and the relay server module 530. In this embodiment, the external server 535 and the mobile electronic devices 520 do not establish permanent sessions. Instead, the external server 535 requests establishment of a transient session between the external server 535 and the relay server module 530 when the external server 535 has information to push to a particular one of the mobile electronic devices 520. In this embodiment, a session is established between the external server 535 and the relay server module 530 for each of the mobile electronic devices for which the external server 535 has information to deliver. Similarly, the relay server module 530 requests establishment of a transient session between the relay server module 530 and one of the mobile electronic devices 520 (e.g., 520a) when the relay server module 530 has information to push to the mobile electronic device 520a. In this embodiment, the information to be pushed could be sent in the signaling channel (e.g., in a SIP message body) or in the bearer channel. Reverse information flows from the mobile electronic device 520a to the relay server module 530 to the external server 535 are also possible. In this case, the mobile electronic devices 520 may request session establishment between themselves and the relay server module 530 when the mobile electronic devices 520 have information to send to the external server 535. In this embodiment, the mobile electronic devices 520 would perform the session establishment request each time the mobile electronic devices 520 have information to send to the external server 535.

In another embodiment, separate sessions are provided between the external server 535 and the relay server module 530 and between the mobile electronic devices 520 and the relay server module 530. Sessions established between the mobile electronic devices 520 and the relay server module 530 may be initiated by either the mobile electronic devices 520 or the relay server module 530. Likewise, sessions established between the relay server module 530 and the external server 535 may be initiated by either the relay server module 530 or the external server 535. The lifetimes of the sessions (e.g., a first session between the relay server module 530 and the external server 535 and second sessions between the mobile electronic devices 520 and the relay server module 530) are independent, being either permanent or transient, with transient sessions being of any desirable and suitable duration. In one example, a permanent external server 535 to relay server module 530 session is established by the external server 535 and transient mobile electronic devices 520 to the relay server module 530 sessions are established, as needed, by either the mobile electronic devices 520 or the relay server module 530.

The embodiments described with reference to FIG. 5 differ from the approach described in relation to FIG. 1 in that the external server 535 is configured as user equipment and interfaces directly with elements of the transport plane 515 and not directly with elements of the service plane 508. Using this approach, the role of the external server 535 is mapped onto the IMS reference architecture as user equipment. In one embodiment, this mapping is provided by introducing the use of the relay server module 530 onto the service plane 508 of the IMS reference architecture. In one embodiment, the relay server module 530 may provide protocol translations which allow the relay server module 530 to use one protocol to communicate with the external server 535 and other protocols to communicate with the mobile electronic devices 520. The relay server module 530 may also implement wireless network specific protocol adaptations which improve performance and reliability in the wireless transport plane 515a.

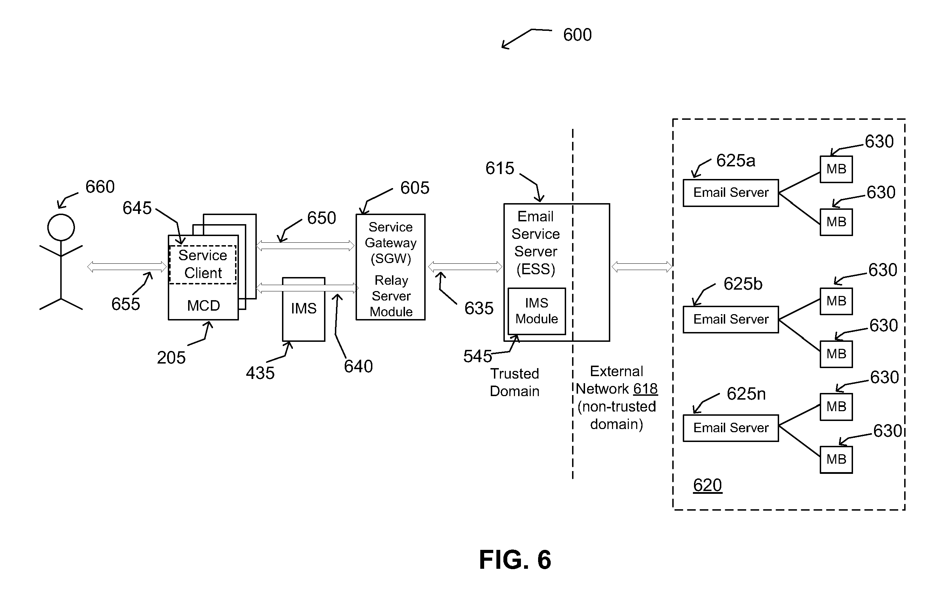

FIG. 6 depicts a network architectural embodiment 600 that illustrates various entities, their logical elements and service flows for a formal model of providing email service delivery over IMS. A service gateway (SGW) 605 is coupled to one or more email service server (ESS) entities 615 disposed in an external network 618 via an interface 635 that uses the IMS protocol. In an embodiment, the ESS 615 may be a corporate server. In this embodiment, the corporate server may be in communication with an email server within the external network 618, and the corporate server may also perform IMS compliant communications with the service gateway 605. In turn, ESS entities 615, which may include the redirection software functionality and IMS module 545 described in the foregoing sections, are coupled to one or more mail messaging systems, e.g., messaging system 620 that may include a plurality of email servers 625a through 625n. Each email server is operable to serve a number of user mailboxes MB 630. To facilitate scalability and reliability, the messaging system 620 may be architected as disclosed in the co-pending commonly assigned U.S. patent application Ser. No. 10/098,083 (filed: Mar. 14, 2002), entitled "SCALABLE AND SECURE MESSAGING SYSTEM FOR A WIRELESS NETWORK," now published as U.S. Patent Application Publication No. 2002/0132609, in the names of: Allan D. Lewis, Tabitha K. Ferguson, James A. Godfrey, Carl L. Cherry and Bill Yuan. A portion of email service server (ESS) entity 615 is shown in the trusted domain and a portion of the email server 615 is shown in the non-trusted external network 618. The email server 615 is divided in this manner to illustrate that the IMS module 545, which is responsible for coordinating IMS compliant communications to and from the server 615, makes the server 615 appear as an IMS compliant node to the SGW 605.

By way of example, the interface 635 may employ a proprietary protocol on top of IMS, such as Email Transport Protocol (ETP) for transmitting processed information between SGW 605 and ESS 615. Alternatively, the interface 635 may employ standards-based protocols on top of IMS, such as Simple Mail Transfer Protocol (SMTP) or an Extended Markup Language (XML)-based protocol. Reference numeral 640 refers to exemplary signaling path via IMS 435 between SGW 605 and Service Client (SC) software 645 executing on MCD 205, effectuated using SIP. The MCD 205 may operate as an IMS UE. Reference numeral 650 refers to the message flow path between MCD 205 and SGW 605 for transmitting the redirected data items. Interface 655 is a standard email application interface that allows interaction between user 660 and MCD 205, wherein the received data items may be presented, new data items may be created, or reply messages may be generated.

To facilitate routing, the IMS administrative domain relies on a set of Initial Filter Criteria (IFC) when an S-CSCF node in the IMS layer 510 is mapped to a corresponding SGW and associated ESS. The routing rules to find and assign a suitable ESS may be embedded in the IFC provisioned by either the network operator or the service provider. The information may be deployed in an HSS database statically, wherein an assigned S-CSCF node is operable to download the IFC from the HSS when a subscriber's UE (e.g., MCD 205) registers.

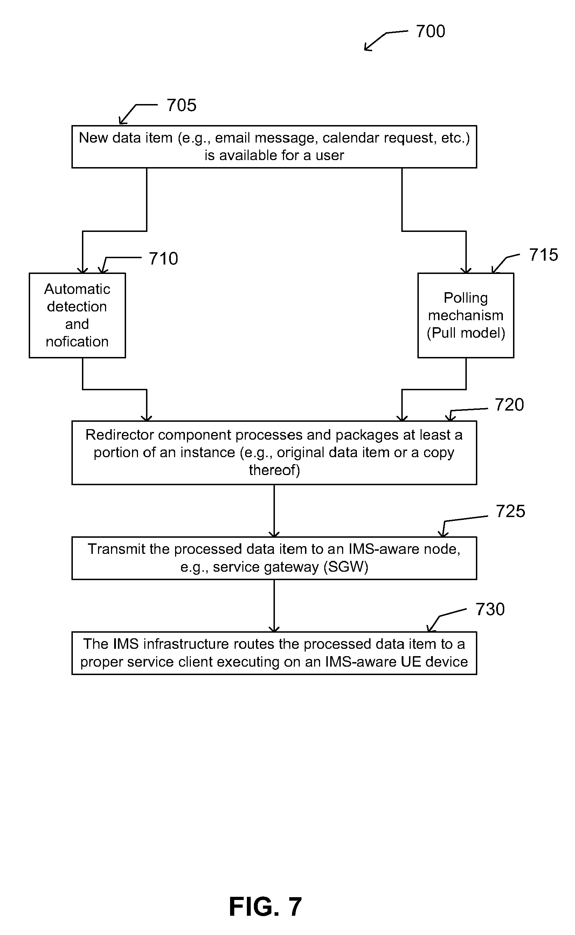

FIG. 7 depicts a flowchart 700 associated with one or more example embodiments of the present patent disclosure for effectuating delivery of data items over IMS. At block 705, a new data item (e.g., email message, calendar request, etc.) is available for a user, either at the user's standalone desktop computer, user's networked computer in a LAN, or at a host/server system in an enterprise network. In a further variation, the data items may be available at an Internet mailbox associated with the user, typically hosted by an Internet Service Provider (ISP), for example, as described in the co-pending commonly assigned U.S. patent application Ser. No. 10/671,162 (filed: Sep. 25, 2003), entitled "SYSTEM AND METHOD FOR PUSHING INFORMATION FROM A HOST SYSTEM TO A MOBILE DATA COMMUNICATION DEVICE," now published as U.S. Patent Application Publication No. 2004/0073619, in the names of: Barry J. Gilhuly, Anh Ngoc Van, Steven M. Rahn, Gary P. Mousseau and Mihal Lazaridis. Regardless of where the data items are available, the new data item may be automatically detected (block 710) or by means of a polling mechanism (block 715). A redirector component processes and packages at least a portion of an instance (i.e., the original data item or a copy thereof) into processed information, including adding address information relating to the user's MCD (block 720). The processed information is then transmitted to an IMS-aware node, e.g., RSS service gateway (SGW) (block 725), whereby the processed information is delivered over the IMS network to a proper service client executing on the user's MCD that is accessible via an access network (block 730).

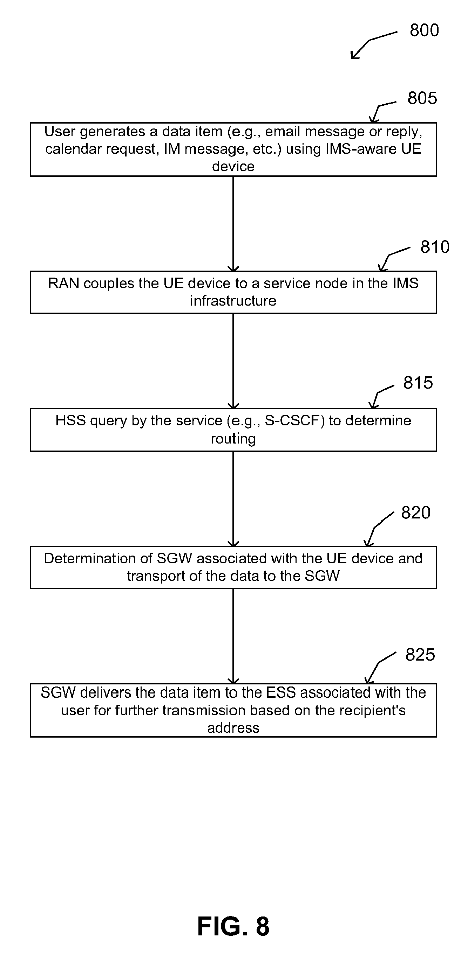

FIG. 8 depicts a flowchart 800 associated with one or more exemplary embodiments of the present patent disclosure for effectuating delivery of a data item from an IMS-aware mobile communications device such as, e.g., MCD 205 shown in FIG. 2. An authorized user generates a data item (e.g., a new email message or a reply to a received message, a calendar request, or an IM message, etc.) using appropriate application software executing on MCD 205, whereupon the SC component executing thereon processes and packages the data item for delivery via IMS (block 805). A suitable RAN couples MCD 205 to a service node in the IMS infrastructure (block 810), wherein the service node or its component (e.g., S-CSCF) queries an HSS node associated with the user's home network to determine routing (block 815). Address information relating to the SGW that is associated with the user's MCD and ESS is determined, whereupon the data item is transported to the SGW using either page mode or session messaging mode (block 820). The SGW thereafter delivers the data item to the ESS associated with the user for further transmission based upon intended recipient's address (block 825).

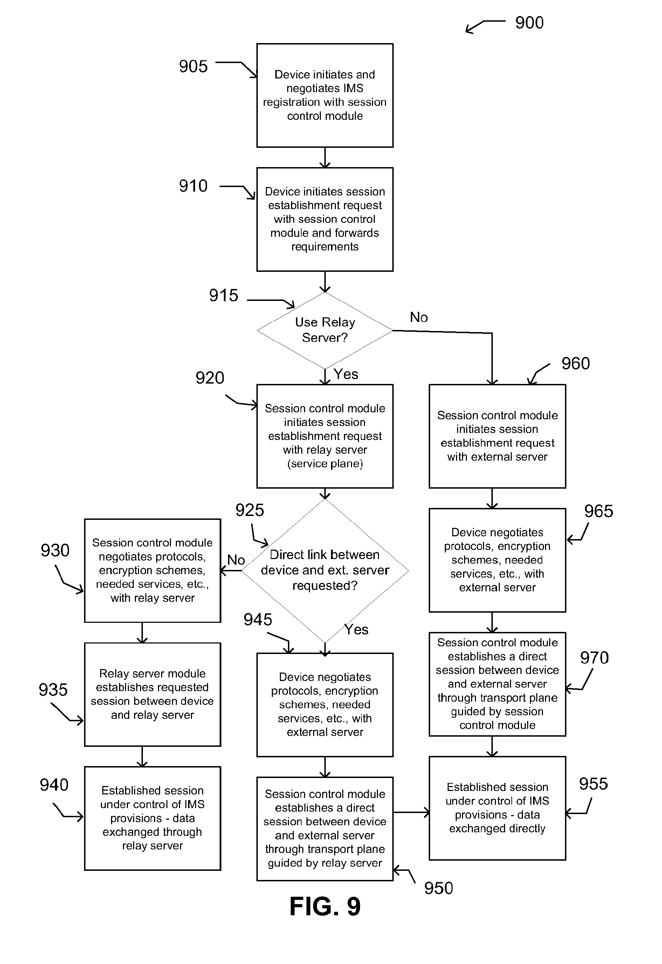

Reference is next made to FIG. 9, which shows in flow chart form a modified IMS session request and registration process for use with the communication system shown in FIG. 2 and the mobile electronic device 520 according to the modified IMS network configuration shown in FIG. 5 in accordance with one embodiment. At block 905, a mobile electronic device, such as the mobile electronic device 205 shown in FIG. 2, initiates and negotiates IMS registration with the session control module to receive service from a network, such as with the session control module 532, residing in a session control plane, such as the session control plane 510. Once the mobile electronic device is registered, a session may then be established. At block 910, the mobile electronic device initiates a session establishment request with the session control module. In one example, such a request may be initiated by an IMS module residing on the mobile electronic device 520 through the WAN 209 and arrive at the wired to wireless gateway 235 and then at the session control module 230 or 532, shown in FIGS. 2 and 5 respectively. Upon making the request, the mobile electronic device also forwards the requirements of the session, such as the desired protocol, encryption scheme, duration (e.g., whether a permanent or transient session is requested), etc. Next, at block 915, it is determined whether a relay server, such as the relay server module 232 shown in FIG. 2 or the relay server module 530 shown in FIG. 5, residing in a service plane, such as the service plane 508 shown in FIG. 5 is to be used to establish and manage the requested session. This determination may be based either on a preference of the user of the mobile electronic device or based on the presence or absence of the relay server in the IMS configuration (such as the IMS architecture 505). If the relay server is to be used, the session control module requests the establishment of the session from the relay server (block 920). The method 900 next determines at a block 925 if a direct link has been requested between the mobile electronic device requesting IMS session establishment and an external server for which communications are destined (e.g., such as the external server 535 shown in FIG. 5). If a direct link has not been requested, the session control module negotiates the requested protocols, encryption schemes, services, and session details with the relay server (block 930). The relay server module establishes the requested session between the mobile electronic device and the relay server module (block 935). Finally, at block 940, the requested IMS session is active and the session is established under the control of the IMS provisions with data being exchanged between the mobile electronic device and the external server via the relay server. If a permanent session was requested, the session may persist indefinitely. If a transient session was requested, the data to be sent is sent and the session terminated, with the method 900 repeating each time data is to be sent by the mobile electronic device. For a permanent session, the external server remains connected to the relay server and may only need one session with the relay server to service all of the mobile electronic devices. If the mobile electronic devices use transient sessions, the external server may also employ a separate transient session with the relay server for each transient session persisting between the mobile electronic devices and the relay server. If, at block 925, the method 900 had determined that a direct link between the mobile electronic device and the external server was requested, the mobile electronic device negotiates protocols, encryption schemes, and needed services with the external server (block 945). The session control module then establishes a direct session, guided by the relay server, between the mobile electronic device and the external server through the transport plane at block 950. Communications then proceed directly from the mobile electronic device to the external server through the transport plane (e.g., from the mobile electronic device 520a to the external server 535, using the connection 560 through the wired to wireless gateway 518, shown in FIG. 5). In one embodiment, communications occur bi-directionally using the wired to wireless gateway 518. Finally, at block 955, the requested IMS session is active and the session is established under the control of the IMS provisions with data being exchanged directly between the mobile electronic device and the external server via the wired to wireless gateway. In one embodiment, if a permanent session was requested, the session between the mobile electronic device and the external server persists indefinitely. In another embodiment, if a transient session was requested, the data to be sent is sent directly and the session terminated, with the method 900 repeating each time data is to be sent or received. If, at block 915, it was determined that the relay server was not to be used, the session control module initiates session establishment request directly with the external server (block 960). To perform block 960, the mobile electronic device requesting the direct link with the external server and circumventing use of the relay server must have needed information, such as a destination network address, to directly contact the external server. The mobile electronic device then negotiates protocols, encryption schemes, needed services, etc., with the external server (block 965). Next, at block 970, the session control module establishes and guides a direct session between the mobile electronic device and the external server through the transport plane. Finally, at block 955, the requested IMS session is active and the session is established under the control of the IMS provisions with data being exchanged directly between the mobile electronic device and the external server via the wired to wireless gateway. In one embodiment, if a permanent session was requested, the session between the mobile electronic device and the external server persists indefinitely. In another embodiment, if a transient session was requested, the data to be sent is sent directly and the session terminated, with the method 900 repeating each time data is to be sent or received.

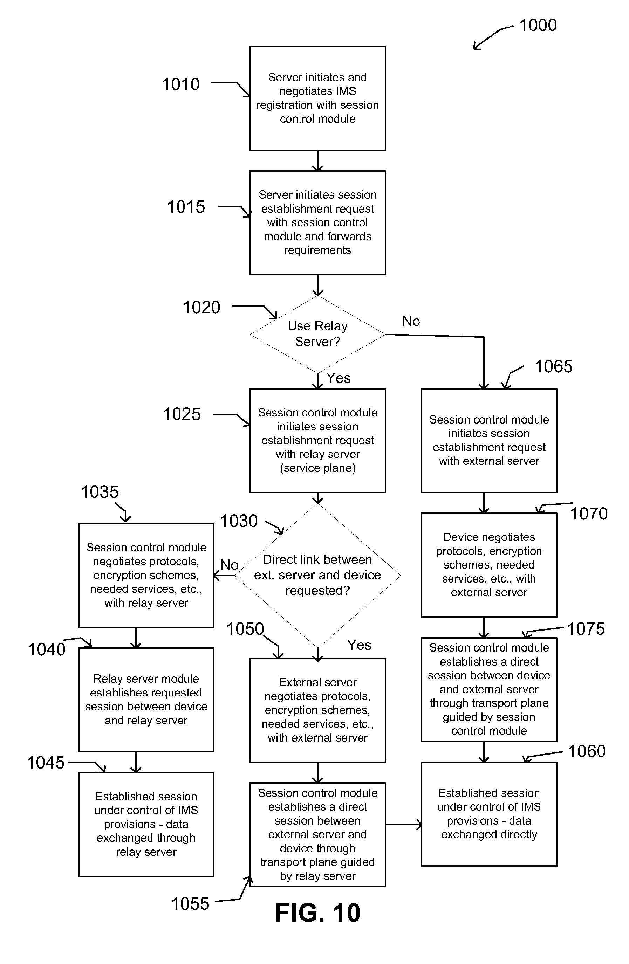

Reference is next made to FIG. 10, which shows a method 1000 in flow chart form a modified IMS session request and registration process for use with the communication system shown in FIG. 2 and the mobile electronic device 520a-n according to the modified IMS network configuration shown in FIG. 5 in accordance with one embodiment. At block 1010, an external server, such as the external server 535 shown in FIG. 5, initiates and negotiates IMS registration with a session control module, such as the session control module 532, residing in a session control plane, such as the session control plane 510. Once the external server is registered, a session may then be established. At block 1015, the external server initiates a session establishment request with the session control module. In one example, such a request may be initiated by the IMS module 545 of the external server 535 through the wired to wireless gateway 518 and then at the session control module 532, shown in FIG. 5. Upon making the request, the external server 535 also forwards the requirements of the session, such as the desired protocol, encryption scheme, duration (e.g., whether a permanent or transient session is requested), etc. Next, at block 1020, it is determined whether a relay server, such as the relay server module 530, residing in a service plane, such as the service plane 508 shown in FIG. 5., is to be used to establish and manage the requested session. This determination may be based either on a preference of the external server requesting the session or based on the presence or absence of the relay server in the IMS configuration (such as the IMS architecture 505). If the relay server is to be used, the session control module requests the establishment of the session from the relay server (block 1025). The method 1000 next determines at a block 1030 if a direct link has been requested between the external server requesting an IMS session and one of the mobile electronic devices for which communications are destined (e.g., such as one of the mobile electronic devices 520a and 520b shown in FIG. 5). If a direct link has not been requested, the session control module negotiates the requested protocols, encryption schemes, services, and session details with the relay server (block 1035). The relay server module then establishes the requested session between the external server and the relay server module (block 1040). Finally, at block 1045 the requested IMS session is established under the control of the IMS provisions with data being exchanged between the mobile electronic device and the external server via the relay server. If a permanent session was requested, the session may persist indefinitely. If a transient session was requested, the data to be sent is sent and the session terminated, with the method 1000 repeating each time data is to be sent or received. For a permanent session, the external server remains connected to the relay server and may only need one session with the relay server to service all of the mobile electronic devices. If transient sessions are to be used by the external server, the external server may employ a separate transient session with the relay server for each session persisting between the mobile electronic devices and the relay server. If, at block 1030, the method 1000 determined that a direct link between the external server and the mobile electronic device was requested, the external server then negotiates protocols, encryption schemes, needed services, etc., with the mobile electronic device (block 1050). Next, the session control module establishes the requested direct session under the guide of the relay server (block 1055). Communications then proceed directly from the external server to the mobile electronic device through the transport plane (e.g., from the external server 535 to the mobile electronic device 520b over the connection 560 using the wired to wireless gateway 518, shown in FIG. 5). In one embodiment, communications occur bi-directionally using the wired to wireless gateway 518. Finally, at block 1060, the requested IMS session is established under the control of the IMS provisions with data being exchanged directly between the mobile electronic device and the external server via the wired to wireless gateway. In one embodiment, if a permanent session was requested, the session between the mobile electronic device and the external server persists indefinitely. In another embodiment, if a transient session was requested, the data to be sent is sent directly and the session terminated, with the method 1000 repeating each time data is to be sent or received. If, at block 1020, it was determined that the relay server was not to be used, the session control module initiates session establishment request directly with the mobile electronic device (block 1065). To perform block 1065, the external server requesting the direct link with the mobile electronic device and circumventing use of the relay server must have needed information, such as a destination network address, to directly contact the mobile electronic device. The external server then negotiates protocols, encryption schemes, needed services, etc., with the mobile electronic device (block 1070). Next, at block 1075, the session control module establishes and guides a direct session between the mobile electronic device and the external server through the transport plane. Finally, at block 1060, the requested IMS session is active and the session is established under the control of the IMS provisions with data being exchanged directly between the external server and the mobile electronic device via the wired to wireless gateway. In one embodiment, if a permanent session was requested, the session between the mobile electronic device and the external server persists indefinitely. In another embodiment, if a transient session was requested, the data to be sent is sent directly and the session terminated, with the method 1000 repeating each time data is to be sent or received.

The IMS delivery model described in FIG. 5 for redirecting data items is relatively simple and straightforward to implement in a number of different network environments. It will be realized, however, that since an assigned S-CSCF node is operable to determine routing information that is static (as embedded within the IFC that populate an HSS database), the IMS administrative domain is not capable of dynamically and intelligently monitoring and adjusting a transmission path between the ESS and a UE device based on the current runtime circumstances of the ESS in order to maintain a reliable service path. In other words, reliance on the use of the static bindings provisioned via the IFC to reach a destined ESS directly may cause reliability and scalability issues in certain network implementations.

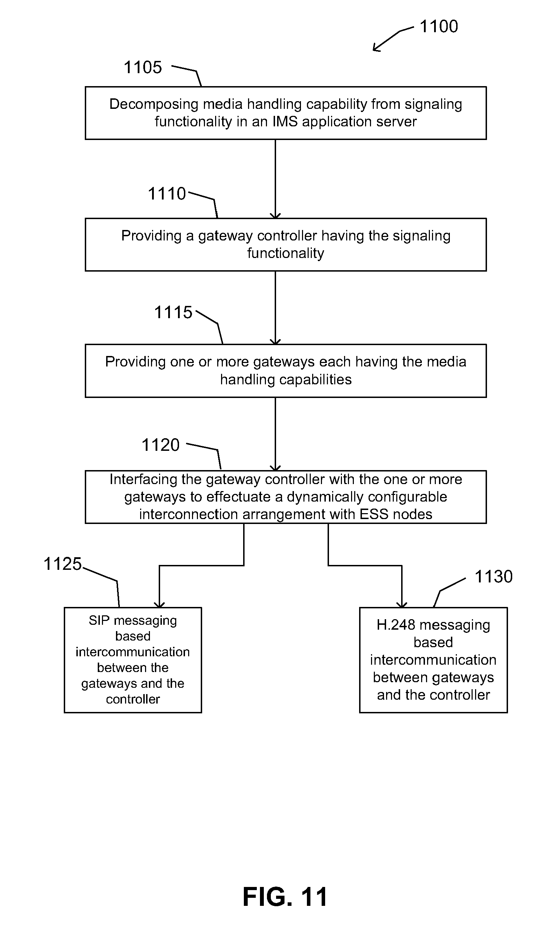

FIG. 11 depicts a flowchart relating to a service gateway decomposition scheme 1100 according to one embodiment wherein scalability and reliability concerns may be advantageously addressed. The decomposition scheme 1100 involves decomposing media handling capability from signaling functionality of a full SGW node such as SGW 605 illustrated in FIG. 6, whereby a number of "thin" SGW nodes are controlled by a controller entity of an IMS network (block 1105). One or more gateway controllers that are logically seen as a single controller node may be provided for embodying the signaling flow functionality (block 1110). A number of SGW nodes may be provisioned in a scalable arrangement, each having media handling capabilities (block 1115). The gateway controller is interfaced with the gateways to effectuate a dynamically configurable interconnection arrangement between the SGWs and ESS nodes (block 1120). Essentially, the functionality of the gateway controller includes monitoring and communicating with the SGWs, wherein the ESS nodes and SCs connect to and consult the gateway controller to obtain and use suitable and reliable SGW nodes for service delivery. As illustrated, the communications between the SGW nodes and the gateway controller may be effectuated using SIP messaging (block 1125), or alternatively, H.248-based messaging (block 1130).

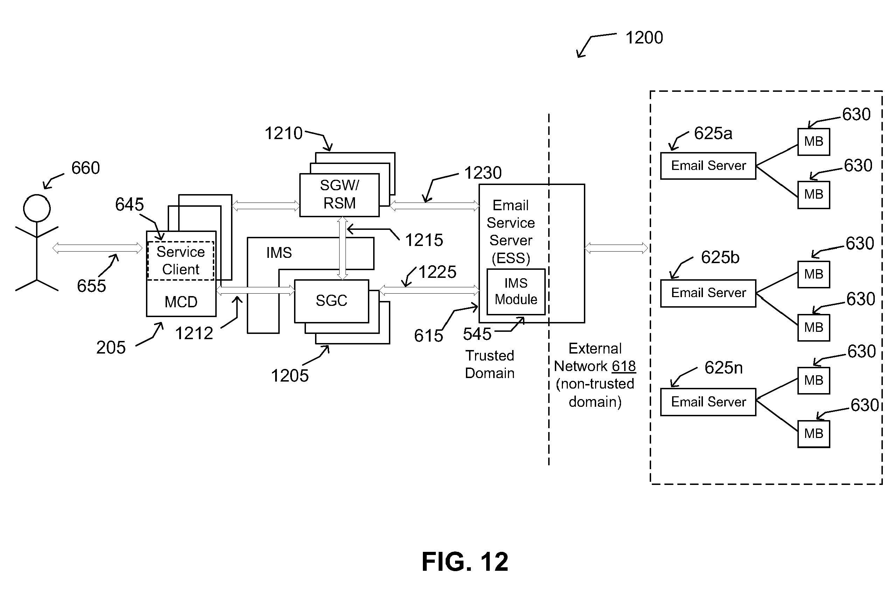

FIG. 12 depicts a network architectural embodiment 1200 for facilitating delivery of data items over IMS wherein service gateway functionality is decomposed in accordance with the teachings set forth herein. As exemplified, external network 618 in this FIGURE is the same as the non-trusted domain depicted in FIG. 6 with respect to the non-decomposed SGW embodiment. One or more service gateway controllers (SGCS) 1205 are interfaced with ESS 615 with respect to effectuating a signaling flow interface 1225. Interface 1230 is operable to effectuate media/message flow in a first protocol, which may be IMS as discussed previously, between ESS 615 and one or more SGWs 1210. Because of the service gateway decomposition, two separate signaling flow paths are necessary: a signaling flow path 1212 between SGCs 1205 and SC 645 on MCDs 205 and another signaling flow path 1215 between SGCs 1205 and SGWs 1210. Whereas the signaling flow path 1212 is effectuated using IMS's SIP-based signaling, an implementer has a choice with respect to the signaling protocol used for the flow path 1215. In one implementation, H.248/Megaco protocol may be used as the signaling communication protocol relative to the flow path 1215. Alternatively, Media Gateway Control Protocol or MGCP may be used in another implementation as the signaling communication protocol between SGCs 1205 and SGWs 1210. In a still further variation, illustrated in FIG. 12, IMS's SIP signaling may be extended so that the communication between SGCs 1205 and SGWs 1210 may also be SIP-based. In this embodiment, accordingly, both SGC functionalities 1205 as well as SGW functionalities 1210 are deployed as IMS entities (i.e., AS nodes) wherein the service network arrangement coupling these components becomes an extension of the IMS infrastructure. Thus, the MCD 205 may operate as a UE, the SGWs 1210 and SGCs 1205 may operate as Application Servers within an IMS network, while the ESS 615 may operate as a UE peer to the MCD 205. Accordingly, such an arrangement may afford the advantage of IMS's management capabilities such as, e.g., security, charging, reliability, etc. extended even to the service network environment. Further, it should be appreciated that if the service network disposed between SGCs 1205 and SGWs 1210 becomes integrated within the IMS infrastructure, the SGC and SGW nodes may inherit all IMS entity characteristics and be seamlessly managed by the IMS administrative domain. In addition, it is relatively more straightforward to interconnect with other IMS networks when service requirements such as, e.g., roaming come into play.

On the other hand, implementing H.248 as the signaling protocol for the service network between SGCs 1205 and SGWs 1210 does not allow the service network to become part of the IMS infrastructure inasmuch as the SGW nodes 1210 are logically IMS-independent entities and as such exist outside the IMS administrative domain. However, in a further variation, the H.248/Megaco signaling communication may be adapted to run over SIP, wherein an H.248 context will be treated as a SIP extension that allows integration between H.248 and SIP.

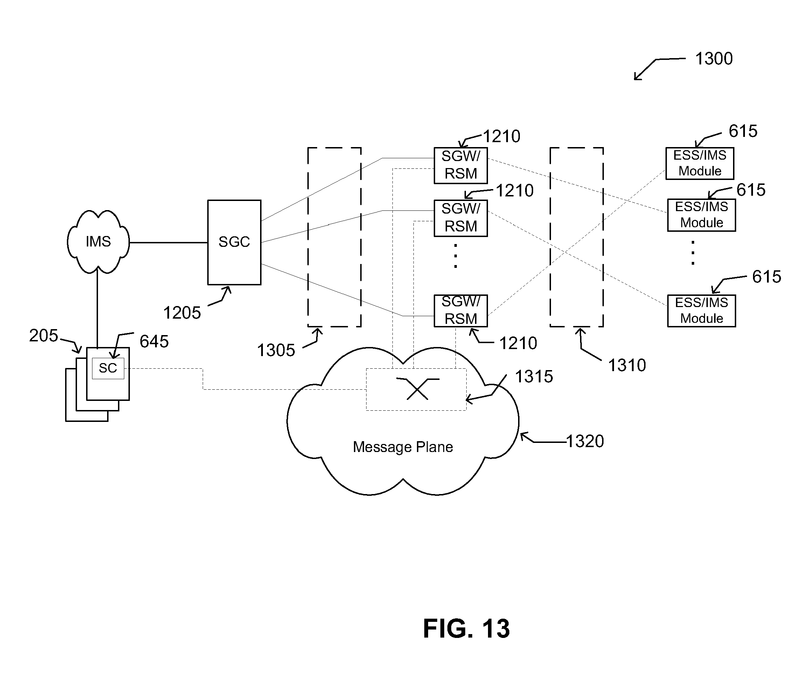

FIG. 13 depicts a network communications environment 1300 that illustrates a service network 1305 disposed between SGC 1205 and SGWs 1210. Additionally, the network communications environment 1300 is illustrative of a dynamically configurable routing arrangement 1310 between SGWs 1210 and ESS nodes 615 at one end of the environment 1300 as well as a dynamically configurable routing arrangement 1315 between SCs 645 and SGWs 1210 with respect to IMS's message plane 1320. It will be realized that although there may exist multiple SGCs based on a priority policy configured in an IMS node (i.e., HSS) with respect to a particular service delivery (e.g., delivery of redirected email), logically they are operable as a single centralized SGC, e.g., SGC 1205, having a fixed and well known SIP URI, host/service (or resource) name and an IP address, which could be accessed by the external entities such as ESS nodes 615 and SCs 645 operating on respective MCDs 205. In general operation, SC 645 or ESS 615 contacts SGC 1205 using the IMS signaling plane to find a suitable SGW. Responsive thereto, SGC 1205 is operable to assign a particular SGW to SC 645 or ESS 615. SC 645 establishes a messaging session with the assigned SGW 1210 that is already connected to a particular ESS 615 with which SC 645 is associated. Alternatively, SGC 1205 may interrogate a target ESS (i.e., the ESS with which SC 645 is configured to communicate) to connect to the assigned SGW 1210. Once the end-to-end path is established between SC 645 and the target ESS 615, SC 645 may then receive the redirected data items as processed information from ESS 615 via the particular SGW 1210 assigned to the current messaging session. In order to maintain reliability and scalability, SGC 1205 may dynamically alter the assignment of SGWs 1210 with respect to the various sessions between SCs 645 and ESS nodes 615 that may be going on at any one time. In other words, routing connection arrangement 1310 between SGWs 1210 and ESS nodes 615 may be reassigned by SGC 1205 such that an end-to-end message flow path between a particular SC 645 and the associated target ESS 615 may be mediated by different SGWs at different times. Likewise, routing connection arrangement 1315 that illustrates routing on the message plane 1320 of the network environment 1300 between SCs 645 and SGWs 1210 may also be dynamically managed to further improve the overall reliability and scalability of the service architecture. Additionally, since the signaling and messaging planes are separated due to the service gateway decomposition, the service model illustrated in FIGS. 12 and 13 also provides protection against possible interference between the two planes, which in turn helps to improve scalability.

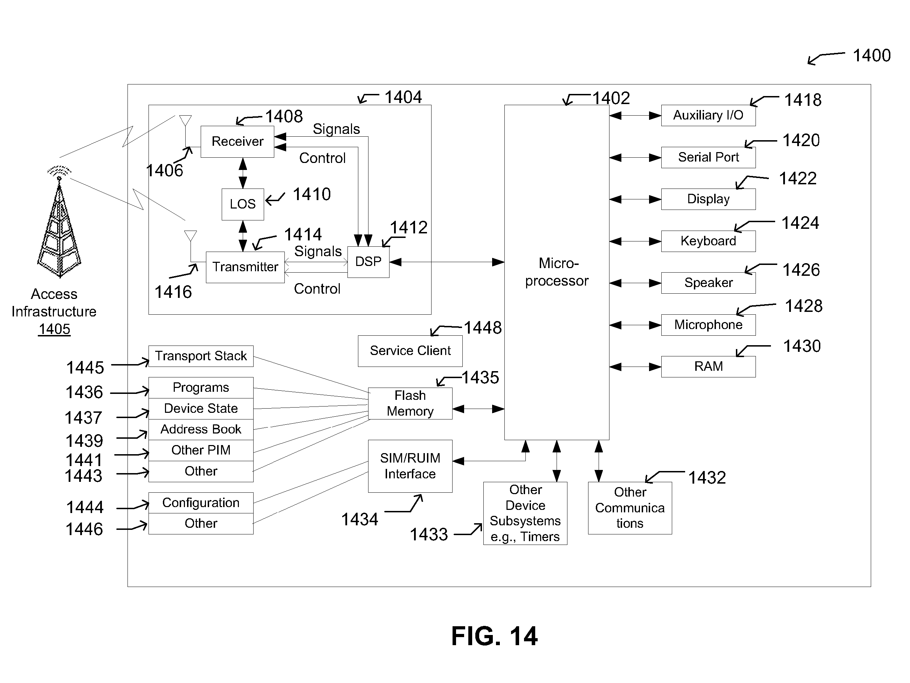

FIG. 14 depicts a block diagram of an embodiment of a user equipment (UE) device 1400 operable as, e.g., MCD 135, for purposes of the present patent disclosure. It will be recognized by those skilled in the art upon reference hereto that although an embodiment of MCD 135 may comprise an arrangement similar to one shown in FIG. 14, there can be a number of variations and modifications, in hardware, software or firmware, with respect to the various modules depicted. Further, UE device 1400 for purposes of the present disclosure may comprise a mobile equipment (ME) device without a removable storage module and a mobile device coupled with such a storage module. Accordingly, the arrangement of FIG. 14 should be taken as illustrative rather than limiting with respect to the embodiments of the present patent application. A microprocessor 1402 providing for the overall control ofUE 1400 is operably coupled to a communication subsystem 1404 that may preferably be capable of multi-mode communications (e.g., CS domain and PS domain). The communication subsystem 1404 generally includes one or more receivers 1408 and one or more transmitters 1414 as well as associated components such as one or more local oscillator (LO) modules 1410 and a processing module such as a digital signal processor (DSP) 1412. As will be apparent to those skilled in the field of communications, the particular design of the communication module 1404 may be dependent upon the communications networks with which the mobile device is intended to operate (e.g., a CDMA network, a GSM network, WLAN, et cetera). Regardless of the particular design, however, signals received by antenna 1406 through appropriate access infrastructure 1405 (e.g., cellular base station towers, WLAN hot spots, etc.) are provided to receiver 1408, which may perform such common receiver functions as signal amplification, frequency down conversion, filtering, channel selection, analog-to-digital (A/D) conversion, and the like. Similarly, signals to be transmitted are processed, including modulation and encoding, for example, by DSP 1412, and provided to transmitter 1414 for digital-to-analog (D/A) conversion, frequency up conversion, filtering, amplification and transmission over the air-radio interface via antenna 1416.

Microprocessor 1402 may also interface with further device subsystems such as auxiliary input/output (I/O) 1418, serial port 1420, display 1422, keyboard/keypad 1424, speaker 1426, microphone 1428, random access memory (RAM) 1430, a short-range communications subsystem 1432, and any other device subsystems, e.g., timer mechanisms, generally labeled as reference numeral 1433. To control access, an interface 1434 operable with a Universal Subscriber Identity Module or Removable User Identity Module (USIM/RUIM) may also be provided in communication with the microprocessor 1402. In one implementation, USIM/RUIM interface 1434 is operable with a USIM/RUIM card having a number of key configurations 1444 and other information 1446 such as identification and subscriber-related data.

Operating system software and applicable service logic software may be embodied in a persistent storage module (i.e., non-volatile storage) such as Flash memory 1435. In one implementation, Flash memory 1435 may be segregated into different areas, e.g., storage area for computer programs 1436 (e.g., service processing logic), as well as data storage regions such as device state 1437, address book 1439, other personal information manager (PIM) data 1441, and other data storage areas generally labeled as reference numeral 1443. A transport stack 1445 may be provided to effectuate one or more appropriate radio-packet transport protocols. In addition, service client logic 1448 operable to effectuate signaling and message pathways with respect to delivery and processing of redirected data items is also provided. It should be appreciated that the various operations set forth herein, either on the UE device side, ESS side, or on the IMS SGC/SGW side, may be accomplished via a number of means, including software (e.g., program code), firmware, hardware, or in any combination, usually in association with a processing system. Where the processes are embodied in software, such software may comprise program instructions that form a computer program product, uploadable service application software, or software downloadable from a remote station, and the like.

It is believed that the operation and construction of the embodiments of the present patent application will be apparent from the Detailed Description set forth above. While the exemplary embodiments shown and described may have been characterized as being preferred, it should be readily understood that various changes and modifications could be made therein without departing from the scope of the present disclosure as set forth in the following claims.

The steps or operations described herein are just for example. There may be many variations to these steps or operations without departing from the spirit of the invention. For instance, the steps may be performed in a differing order, or steps may be added, deleted, or modified.

Although example implementations of the invention have been depicted and described in detail herein, it will be apparent to those skilled in the relevant art that various modifications, additions, substitutions, and the like can be made without departing from the spirit of the invention and these are therefore considered to be within the scope of the invention as defined in the following claims.

## Claims

1. An apparatus, comprising an external server (145, 535), wherein the external server:
resides outside an IP multimedia subsystem (IMS) network (110);
further comprises a server redirector (252) configured to package an email where packaging the email comprises wrapping the email in an email envelope; and
further comprises an IMS module (235, 545) configured to perform peer-to-peer IMS compliant communications.

2. The apparatus of claim 1 wherein:
the external server is an email server;
the external server is communicatively coupled with a computing device;
the external server is communicatively coupled with at least one mobile communication device, where the computing device communicates the email to the at least one mobile communication device via the external server, and the server redirector packages the at least one email and sends the email to the at least one mobile communication device; and
the at least one mobile communication device further comprises a mobile redirector that processes the email.

3. The apparatus of claim 2 wherein the computing device further comprises a computing device redirector, where the computing device redirector is configured to package an email and send the packaged email to the at least one mobile communication device via the external server.

4. The apparatus of claim 2 wherein:
the external server is communicatively coupled with a service gateway controller and the service gateway controller is communicatively coupled with the at least one mobile communication device;
the service gateway controller is communicatively coupled with at least one service gateway, the at least one service gateway is communicatively coupled with the at least one mobile communication device;
the at least one mobile communication device establishes a session with the service gateway controller using IMS signaling; and
the service gateway controller assigns a service gateway from the at least one service gateway and directs the at least one mobile communication device and the external server to continue the session via the service gateway.

5. The apparatus of claim 4 wherein:
the service gateway further comprises a relay server module;
the at least one mobile communication device further comprises a service client;
the service client is communicatively coupled with the relay server module;
the relay server module is communicatively coupled with the IMS module;
the IMS module requests that the relay server module establish a session with the service client, and the relay server module establishes a session with the service client; and
the IMS module communicates data to the service client via the relay server module wherein the IMS module resides in an IMS transport plane, the service client resides in the IMS transport plane and peer-to-peer data communication is performed between the IMS module comprising the external server and the service client.

6. An apparatus, comprising an IMS compliant mobile communication device (205, 520, 1400), the mobile communication device comprising:
a mobile redirector (256) that is configured to receive and unpackage packaged emails; and
a service client (645) that is configured to perform a peer-to-peer IMS session with an external server (145, 535) that resides outside an IMS network (110).

7. The apparatus of claim 6 wherein:
the external server is an email server;
the mobile communication device is communicatively coupled with the external server;
the external server comprises a server redirector that is configured to receive an email addressed to a computing device, package the received email and send the packaged email to the mobile communication device.

8. The apparatus of claim 7 wherein the mobile communication device communicates an email to the external server and the external server packages the email so that it appears to a recipient that the email came from a computing device other than the mobile communication device.

9. A method of pushing at least one email using peer-to-peer communication from an external server (145, 535) to an IMS compliant mobile communication device (205, 520, 1400) where the external server resides outside an IMS network (110), the method comprising:
configuring the external server with a server redirector (252) that packages the at least one email by wrapping the email in an email envelope and communicates the email to the mobile communication device; and
configuring the external server with an IMS module (235, 545) that performs IMS compliant communications with the external server.

10. The method of claim 9 wherein:
the external server is an email server;
the external server is communicatively coupled with the mobile communication device, where a computing device sends an email to the mobile communication device via the external server and the server redirector packages the email and sends the email to the mobile communication device; and
the mobile communication device further comprises a mobile redirector that processes the email.

11. The apparatus or method of claims 6 or 10, respectively wherein:
the external server is communicatively coupled with a service gateway controller and the service gateway controller is communicatively coupled with the mobile communication device;
the service gateway controller is communicatively coupled with at least one service gateway, the at least one service gateway is communicatively coupled with the mobile communication device;
the mobile communication device establishes a session with the service gateway controller using IMS signaling; and
the service gateway controller assigns a service gateway from the at least one service gateway controller and directs the mobile communication device and the external server to establish a session via the service gateway.

12. The apparatus of claim 11 wherein:
the service gateway further comprises a relay server module;
the mobile communication device further comprises a service client;
the service client is communicatively coupled with the relay server module;
the relay server module is communicatively coupled with the IMS module;
the IMS module requests that the relay server module establish a session with the mobile communication device, and the relay server module establishes a session with the service client; and
the IMS module communicates data to the service client via the relay server module wherein the IMS module resides in an IMS transport plane, the service client resides in the IMS transport plane and peer-to-peer data communication is performed between the IMS module and the service client.

13. The method of claim 12 further comprising a wired to wireless gateway where the wired to wireless gateway is communicatively coupled with the mobile communication device, and the external server communicates a request for a direct connection with the mobile communication device where the request for a direct connection is communicated to the relay server module, and the relay server module coordinates a direct connection between the external server and the mobile communication device, where the mobile communication device and the external server perform a peer-to-peer data exchange using the direct connection.

14. The method of claim 12 wherein the service gateway controller instructs the mobile communication device to terminate the session with the service gateway and establish a data session with a second service gateway.

15. The apparatus of claim 11 wherein:
the service gateway further comprises a relay server module;
the external server further comprises an IMS module;
the service client is communicatively coupled with the relay server module;
the relay server module is communicatively coupled with the IMS module;
the service client requests that the relay server module establish a session with the external server, and the relay server module establishes a session with the IMS module comprising the external server; and
the IMS module communicates data to the service client via the relay server module wherein the IMS module resides in an IMS transport plane, the service client resides in the IMS transport plane and peer-to-peer data communication is performed between the IMS module comprising the external server and the service client comprising the mobile communication device.
